# EUROPEAN PATENT APPLICATION

(11) **EP 4 576 245 A1**
(43) Date of publication of application: **25.06.2025**
(21) Application number: 23925757.9
(22) Date of filing: 08.03.2023
(51) Int. Cl.: H01M 4/133

(54) **NEGATIVE ELECTRODE SHEET AND PREPARATION METHOD THEREFOR, BATTERY CELL, BATTERY, AND ELECTRICAL DEVICE**

(71) Applicant: Contemporary Amperex Technology (Hong Kong) Limited, Central (HK)
(72) Inventor: LI, Lianchuan, Ningde, Fujian 352100 (CN); SHEN, Rui, Ningde, Fujian 352100 (CN); LI, Yuanyuan, Ningde, Fujian 352100 (CN); HE, Libing, Ningde, Fujian 352100 (CN)
(74) Representative: Frick, Robert
(86) International application number: PCT/CN2023/080330
(87) International publication number: WO 2024/183034

(57) **Abstract**

This application provides a negative electrode plate and a preparation method thereof, a battery cell, a battery, and an electric apparatus. The negative electrode plate includes a current collector and a film layer disposed on the current collector. The film layer includes a first portion and a second portion disposed along a thickness direction of the film layer, where the first portion is disposed on the current collector, and the second portion is disposed on the first portion. The first portion includes a first carbon-based active material, the second portion includes a second carbon-based active material, the second carbon-based active material includes secondary particles, and a powder compacted density of the first carbon-based active material is greater than a powder compacted density of the second carbon-based active material. When the negative electrode plate is used in a battery, the battery can have a high energy density and good cycling performance.

## Description

### TECHNICAL FIELD

This application relates to the field of battery technologies, and in particular, to a negative electrode plate and a preparation method thereof, a battery cell, a battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of secondary batteries, higher requirements are imposed on their energy density, cycling performance, and the like.

A method to increase energy density of a battery is to increase a loading amount of active substances on a negative electrode plate. However, as the loading amount of active substances increases, the thickness of the negative electrode plate increases, and the swelling effect of a negative electrode active material layer is exacerbated during cycling of the battery, making the negative electrode active material layer to be more prone to collapse, and severely affecting ionic kinetic performance. How to ensure that secondary batteries have both high energy density and good charging and discharging performance is an urgent technical problem that needs to be solved.

### SUMMARY

This application is made in view of the above technical problem and aims to provide a negative electrode plate, a method for preparing a negative electrode plate, a battery cell, a battery, and an electric apparatus. When the negative electrode plate is used in a battery, the battery can have a high energy density and good charging and discharging performance.

According to a first aspect, this application provides a negative electrode plate including a negative electrode current collector and a film layer disposed on the negative electrode current collector, where the film layer includes a first portion and a second portion disposed along a thickness direction of the film layer, the first portion is disposed on the current collector, and the second portion is disposed on the first portion. The first portion includes a first carbon-based active material, the second portion includes a second carbon-based active material, the second carbon-based active material includes secondary particles, and a powder compacted density of the first carbon-based active material is greater than a powder compacted density of the second carbon-based active material.

In embodiments of this application, on the one hand, the first portion is provided with the first carbon-based active material. The first carbon-based active material has a higher powder compacted density than the second carbon-based active material, providing a higher loading amount of active substances for the negative electrode plate, thereby providing a higher energy density for a battery. On the other hand, the second portion is provided with the second carbon-based active material. The second carbon-based active material includes secondary particles, so that the second carbon-based active material has good ionic kinetic performance. Thus, the first carbon-based active material provided on the first portion and the second carbon-based active material provided on the second portion have a synergistic effect, so that the battery has a high energy density, good charging and discharging performance, and good cycling performance.

In some embodiments, the powder compacted density ρ₂ of the second carbon-based active material under a pressure of 50000 N satisfies: 1.70 g/cc ≤ ρ₂ ≤ 1.90 g/cc, optionally, 1.80 g/cc ≤ ρ₂ ≤ 1.90 g/cc.

In some embodiments, the second carbon-based active material satisfies at least one of the following (1) to (3): (1) a specific surface area SSA₂ of the second carbon-based active material satisfies: 1.2 m²/g ≤ SSA₂ ≤ 3.0 m²/g, optionally, 1.5 m²/g ≤ SSA₂ ≤ 2.0 m²/g; (2) a particle size by volume Dᵥ50₂ of the second carbon-based active material satisfies: 8.0 µm ≤ Dᵥ50₂ ≤ 20.0 µm, optionally, 10.0 µm ≤ Dᵥ50₂ ≤ 18.0 µm; and (3) a mass specific capacity Cₘ₂ of the second carbon-based active material satisfies: 340 mAh/g ≤ Cₘ₂ ≤ 355 mAh/g, optionally, 343 mAh/g ≤ Cₘ₂ ≤ 350 mAh/g.

In some embodiments, an OI value of the negative electrode plate satisfies: 10 ≤ OI ≤ 30.

In some embodiments, the powder compacted density ρ₁ of the first carbon-based active material under a pressure of 50000 N satisfies: 1.70 g/cc ≤ ρ₁ ≤ 2.05 g/cc, optionally, 1.80 g/cc ≤ ρ₁ ≤ 2.05 g/cc.

In the embodiments of this application, under a condition that the first portion of the film layer is provided with the first carbon-based active material and the second portion of the film layer is provided with the second carbon-based active material, the powder compacted density of the first carbon-based active material is controlled within an appropriate range, so that an inner side of the film layer close to the current collector has a high powder compacted density, providing a high energy density for the battery.

In some embodiments, the first carbon-based active material includes micro-oxidized artificial graphite.

In the embodiments of this application, the first carbon-based active material includes the micro-oxidized artificial graphite. Compared with ordinary artificial graphite, the micro-oxidized artificial graphite has a larger powder particle size, a higher graphitization degree, a higher adhesion between particles, and a higher powder compacted density, providing a higher energy density for the battery.

In some embodiments, a powder compacted density ρ₁₋₁ of the micro-oxidized artificial graphite under a pressure of 50000 N satisfies: 1.80 g/cc ≤ ρ₁₋₁ ≤ 2.05 g/cc, optionally, 1.90 g/cc ≤ ρ₁₋₁ ≤ 2.00 g/cc.

In the embodiments of this application, the powder compacted density of the micro-oxidized artificial graphite is controlled within an appropriate range, helping to increase the powder compacted density of the first carbon-based active material, thereby increasing the powder compacted density of the inner side of the film layer, and providing a high energy density for the battery.

In some embodiments, the micro-oxidized artificial graphite satisfies at least one of the following (4) to (6): (4) a specific surface area SSA₁ of the micro-oxidized artificial graphite satisfies: 1.6 m²/g ≤ SSA₁ ≤ 3.5 m²/g, optionally, 1.8 m²/g ≤ SSA₁ ≤ 2.8 m²/g; (5) a particle size by volume Dᵥ50₁ of the micro-oxidized artificial graphite satisfies: 10.0 µm ≤ Dᵥ50₁ ≤ 30.0 µm, optionally, 13.0 µm ≤ Dᵥ50₁ ≤ 25.0 µm; and (6) a mass specific capacity Cₘ₁ of the micro-oxidized artificial graphite satisfies: 350 mAh/g ≤ Cₘ₁ ≤ 365 mAh/g, optionally, 355 mAh/g ≤ Cₘ₁ ≤ 362 mAh/g.

In some embodiments, the micro-oxidized artificial graphite includes secondary particles.

In the embodiments of this application, the micro-oxidized artificial graphite at least partially includes secondary particles, helping to improve the ionic kinetic performance of the micro-oxidized artificial graphite, thereby improving the ionic kinetic performance of the first carbon-based active material of the first portion. Thus, the ionic conductivity of the negative electrode plate is further improved, helping to improve the charging and discharging performance of the battery. In addition, the adhesion between the secondary particles is strong, and the cohesion inside the negative electrode plate is strong, helping to alleviate the swelling effect of the negative electrode plate during cycling of the battery, thereby helping to improve the cycling performance and service life of the battery.

In some embodiments, a quantity percentage n of the secondary particles in the micro-oxidized artificial graphite satisfies: 70% ≤ n ≤ 90%.

In some embodiments, the first carbon-based active material further includes natural graphite.

In the embodiments of this application, the natural graphite is introduced into the first carbon-based active material, helping to improve the gram capacity of the first carbon-based active material, and further helping to increase the energy density of the battery.

In some embodiments, a ratio of a mass m₂ of the natural graphite to a mass m₁ of the first carbon-based active material satisfies: 0% < m₂/m₁ ≤ 50%.

In some embodiments, a ratio of a thickness h₁ of the first portion to a thickness h of the film layer satisfies: 40% ≤ h₁/h ≤ 60%.

In some embodiments, a ratio of a thickness h₂ of the second portion to the thickness h of the film layer satisfies: 40% ≤ h₂/h ≤ 60%.

According to a second aspect, a method for preparing a negative electrode plate is provided, including: providing a current collector; preparing a first portion of a film layer on the current collector, where the first portion includes a first carbon-based active material; and preparing a second portion of the film layer on the first portion of the film layer, where the second portion includes a second carbon-based active material, the second carbon-based active material includes secondary particles, and a powder compacted density of the first carbon-based active material is greater than a powder compacted density of the second carbon-based active material.

In the embodiments of this application, the film layer is prepared to have the first portion including the first carbon-based active material and the second portion including the second carbon-based active material. The first carbon-based active material has a high compacted density, providing a high energy density for the battery. The secondary particles in the second carbon-based active material can provide good ionic kinetic performance. Thus, negative electrode plates prepared using the above method have a synergistic effect in terms of structure and material, enabling the battery to have a high energy density, and further enabling the battery to have good charging and discharging performance and cycling performance.

According to a third aspect, a battery cell is provided, where the battery cell includes the negative electrode plate according to any one of the embodiments of the first aspect of this application or a negative electrode plate prepared using the method for preparing a negative electrode plate according to any one of the embodiments of the second aspect of this application.

According to a fourth aspect, a battery is provided, where the battery includes the battery cell according to any one of the embodiments of the third aspect of this application.

According to a fifth aspect, an electric apparatus is provided, where the electric apparatus includes the battery cell according to any one of the embodiments of the third aspect of this application and/or the battery according to any one of the embodiments of the fourth aspect of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts. The accompanying drawings are not drawn to scale.
FIG. 1 is a schematic structural diagram of a negative electrode plate of this application.
FIG. 2 is a schematic flowchart of a method for preparing a negative electrode plate of this application.
FIG. 3 is a schematic diagram of a battery cell of this application.
FIG. 4 is a schematic diagram of a battery module of this application.
FIG. 5 is a schematic diagram of a battery of this application.
FIG. 6 is another schematic diagram of a battery of this application.

### DESCRIPTION OF EMBODIMENTS

Embodiments that specifically disclose a negative electrode plate, a method for preparing a negative electrode plate, a battery cell, a battery, and an electric apparatus in this application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combinations of real numbers between a and b, where both a and b are real numbers. For example, a value range of "0-5" means that all real numbers in the range of "0-5" are listed herein, and "0-5" is just an abbreviated representation of a combination of these numbers. In addition, when a parameter is expressed as an integer greater than or equal to 2, it is equivalent to disclosure that the parameter is, for example, an integer among 2, 3, 4, 5, 6, 7, 8, 9, 10, 11, 12, and so on.

In the description of this application, it should be noted that, unless otherwise specified, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, the following terms have the following meanings. Any undefined terms have their technically accepted meanings.

Typically, a battery includes a positive electrode plate, a negative electrode plate, an electrolyte, and a separator. During charging and discharging of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through. In some embodiments, the battery of this application is also referred to as a secondary battery.

In this application, a lithium-ion battery is used as an example. The lithium-ion battery is a typical secondary battery. Since the lithium-ion battery is charged and discharged through chemical reactions caused by intercalation and deintercalation of lithium ions between positive and negative electrodes, the lithium-ion battery is referred to as a rocking-chair battery. During charging of the lithium-ion battery, lithium ions are deintercalated from the positive electrode, move, and then are intercalated into the negative electrode; and during discharging, lithium ions are deintercalated from the negative electrode, move, and then are intercalated into the positive electrode.

It should be understood that the "intercalation of lithium" or "intercalation" process in this application refers to a process in which lithium ions are intercalated into a positive electrode material and a negative electrode material due to electrochemical reactions. The "deintercalation", "deintercalation of lithium", or "deintercalation" process in this application refers to a process in which lithium ions are deintercalated from a positive electrode material and a negative electrode material due to electrochemical reactions.

First, some technical terms involved in the embodiments of this application are described.

"Carbon-based active material" refers to a material using carbon as a matrix, including a carbon-based composite material, a fiber-reinforced composite material, a graphite and graphene material, and the like.

"Micro- oxidization treatment" refers to a process of placing a material in an oxidizing atmosphere at a temperature of 600°C-900°C for a micro-oxidization reaction.

"Primary particle" refers to a particle that uses carbon as a matrix, is formed by a raw material through processes such as directly crushing, shaping, and graphitization, and is also referred to as a carbon-based single particle.

"Secondary particle" refers to a particle that uses carbon as a matrix and is formed by graphitization of particles obtained by primary particles through agglomeration, granulation, or other processes.

With increasingly wide use of batteries, higher requirements are imposed on the energy density of the batteries. Powder compacted densities of positive and negative electrode plates are increased, so that the positive and negative electrode plates per unit area or volume can load more positive and negative electrode active materials, effectively increasing the energy density of the battery. A negative electrode plate is used as an example. A thicker film layer of the negative electrode plate leads to a higher compacted density, so that the energy density that can be contributed by the negative electrode plate is increased accordingly. However, a compacted density that a current collector can withstand is limited, a thick film layer may exacerbate the swelling effect of the negative electrode plate during cycling of the battery, and the film layer is more prone to collapse, which is not conducive to deintercalation and intercalation of active ions in a negative electrode active material, thereby severely affecting the ionic kinetic performance of the battery and leading to poor rate performance.

In view of this, an embodiment of this application provides a negative electrode plate, where a film layer of the negative electrode plate includes a first portion disposed on a negative electrode current collector and a second portion disposed on the first portion. The first portion includes a first carbon-based active material, and the second portion includes a second carbon-based active material. The first carbon-based active material has a high compacted density, and the second carbon-based active material includes secondary particles. The first carbon-based active material and the second carbon-based active material have a synergistic effect, so that the negative electrode plate can provide a high energy density for the battery and can also help to improve the charging and discharging performance and cycling performance of the battery.

The following describes in detail the negative electrode plate, positive electrode plate, separator, and other portions of the battery.

### [Negative electrode plate]

The negative electrode plate includes a negative electrode current collector and a negative electrode film layer disposed on at least one surface of the negative electrode current collector, where the negative electrode film layer includes a negative electrode active material. It should be understood that the negative electrode film layer is a film layer disposed on the negative electrode current collector.

For example, the negative electrode current collector has two opposite surfaces in its thickness direction, and the negative electrode film layer is disposed on either or both of the two opposite surfaces of the negative electrode current collector.

For example, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

Optionally, the negative electrode active material may be a negative electrode active material for batteries well-known in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

Optionally, the negative electrode film layer further includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

Optionally, in an embodiment, the negative electrode film layer further includes a conductive agent. The conductive agent may be selected from at least one of superconducting carbon, acetylene black, carbon black, Ketjen black, carbon dots, carbon nanotubes, graphene, and carbon nanofiber.

Optionally, the negative electrode film layer further includes other additives such as a thickener (for example, sodium carboxymethyl cellulose (CMC-Na)).

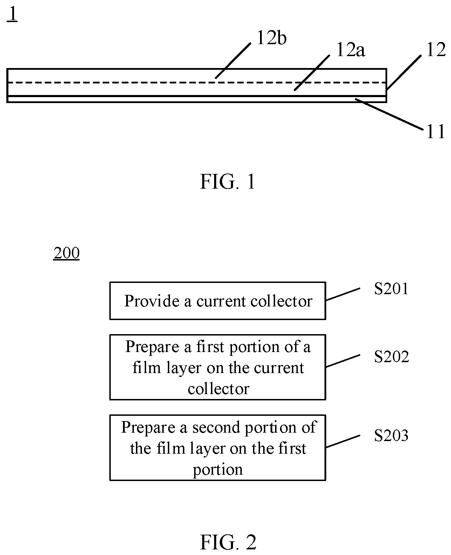

FIG. 1 is a schematic structural diagram of a negative electrode plate according to an embodiment of this application.

As shown in FIG. 1, a negative electrode plate 1 includes a negative electrode current collector 11 and a film layer 12 disposed on the negative electrode current collector 11.

The film layer 12 includes a first portion 12a and a second portion 12b. The first portion 12a is disposed on the negative electrode current collector 11, and the second portion 12b is disposed on the first portion 12a.

The first portion 12a includes a first carbon-based active material, the second portion 12b includes a second carbon-based active material, the second carbon-based active material includes secondary particles, and a powder compacted density of the first carbon-based active material is greater than a powder compacted density of the second carbon-based active material.

Specifically, the film layer 12 is the above-mentioned negative electrode film layer. In the negative electrode plate 1, the first portion 12a of the film layer 12 is provided with the first carbon-based active material, and the second portion 12b of the film layer 12 is provided with the second carbon-based active material. The powder compacted density of the first carbon-based active material is greater than the powder compacted density of the second carbon-based active material. Thus, the inner film layer 12 of the negative electrode plate 1 away from an electrolyte has a higher compacted density, providing a higher energy density for a battery. The secondary particles in the second carbon-based active material can provide a large number of active sites for electrochemical reactions of the battery, helping to improve the ionic kinetic performance of the outer film layer 12 of the negative electrode plate 1 close to the electrolyte, thereby providing good charging and discharging performance and cycling performance for the battery.

Optionally, the powder compacted density ρ₂ of the second carbon-based active material under a pressure of 50000 N satisfies: 1.70 g/cc ≤ ρ₂ ≤ 1.90 g/cc, optionally, 1.80 g/cc ≤ ρ₂ ≤ 1.90 g/cc.

Specifically, ρ₂ may be 1.70 g/cc, 1.72 g/cc, 1.74 g/cc, 1.76 g/cc, 1.80 g/cc, 1.82 g/cc, 1.84 g/cc, 1.86 g/cc, 1.88 g/cc, or 1.90 g/cc, or falls within a range defined by any two of the above values.

Optionally, the second carbon-based active material satisfies at least one of the following (1) to (3):
(1) a specific surface area SSA₂ of the second carbon-based active material satisfies: 1.2 m²/g ≤ SSA₂ ≤ 3.0 m²/g, optionally, 1.5 m²/g ≤ SSA₂ ≤ 2.0 m²/g;
(2) a particle size by volume Dᵥ50₂ of the second carbon-based active material satisfies: 8.0 µm ≤ Dᵥ50₂ ≤ 20.0 µm, optionally, 10.0 µm ≤ Dᵥ50₂ ≤ 18.0 µm; and
(3) a mass specific capacity Cₘ₂ of the second carbon-based active material satisfies: 350 mAh/g ≤ Cₘ₂ ≤ 365 mAh/g, optionally, 355 mAh/g ≤ Cₘ₂ ≤ 362 mAh/g.

Specifically, SSA₂ may be 1.2 m²/g, 1.3 m²/g, 1.4 m²/g, 1.5 m²/g, 1.6 m²/g, 1.7 m²/g, 1.8 m²/g, 1.9 m²/g, 2.0 m²/g, 2.2 m²/g, 2.4 m²/g, 2.6 m²/g, 2.8 m²/g, or 3.0 m²/g, or falls within a range defined by any two of the above values.

Dᵥ50₂ may be 8 µm, 10 µm, 12 µm, 14 µm, 15 µm, 16 µm, 18 µm, or 20 µm, or falls within a range defined by any two of the above values.

Cₘ₂ may be 350 mAh/g, 352 mAh/g, 354 mAh/g, 356 mAh/g, 358 mAh/g, 360 mAh/g, 362 mAh/g, or 365 mAh/g, or falls within a range defined by any two of the above values.

Generally, a higher orientation index (OI value) of the negative electrode plate 1 leads to poorer ionic kinetic performance of the negative electrode plate 1.

Optionally, the OI value of the negative electrode plate 1 satisfies: 10 ≤ OI ≤ 30.

Specifically, the OI value may be 10, 12, 14, 16, 18, 20, 22, 24, 26, 28, or 30, or falls within a range defined by any two of the above values.

In this embodiment, the OI value of the negative electrode plate 1 is controlled within an appropriate range, helping to improve the ionic kinetic performance of the first carbon-based active material, thereby helping to improve the charging and discharging performance and cycling performance of the battery.

Optionally, the powder compacted density ρ₁ of the first carbon-based active material under a pressure of 50000 N satisfies: 1.70 g/cc ≤ ρ₁ ≤ 2.05 g/cc, optionally, 1.80 g/cc ≤ ρ₁ ≤ 2.05 g/cc.

Specifically, ρ₁ may be 1.70 g/cc, 1.72 g/cc, 1.74 g/cc, 1.76 g/cc, 1.80 g/cc, 1.82 g/cc, 1.84 g/cc, 1.86 g/cc, 1.88 g/cc, 1.90 g/cc, 1.92 g/cc, 1.94 g/cc, 1.96 g/cc, 1.98 g/cc, 2.00 g/cc, 2.02 g/cc, 2.04 g/cc, or 2.05 g/cc, or falls within a range defined by any two of the above values.

In this embodiment, the powder compacted density ρ₁ of the first carbon-based active material is controlled within an appropriate range, so that the first portion 12a of the film layer 12 has a high powder compacted density, thereby increasing the contribution of the first portion 12a to a loading amount of active substances on the negative electrode plate 1. In addition, the powder compacted density of the first portion 12a is controlled not to exceed a threshold, thereby reducing the possibility of damage to the negative electrode current collector.

In some embodiments, the first carbon-based active material includes micro-oxidized artificial graphite.

Specifically, compared with ordinary artificial graphite, the micro-oxidized artificial graphite has the advantages of large particle size, high degree of graphitization, high gram capacity, and high powder compacted density. As the first carbon-based active material or part of the first carbon-based active material, the micro-oxidized artificial graphite can contribute a high energy density to the negative electrode plate 1. In addition, the adhesion between particles of the micro-oxidized artificial graphite is higher, so that the inner film layer 12 of the negative electrode plate 1 has stronger cohesion and a lower swelling degree during cycling of the battery, thereby helping to improve the cycling performance and service life of the battery.

Optionally, a powder compacted density ρ₁₋₁ of the micro-oxidized artificial graphite under a pressure of 50000 N satisfies: 1.80 g/cc ≤ ρ₁₋₁ ≤ 2.05 g/cc, optionally, 1.90 g/cc ≤ ρ₁₋₁ ≤ 2.00 g/cc.

Specifically, ρ₁₋₁ may be 1.80 g/cc, 1.85 g/cc, 1.90 g/cc, 1.95 g/cc, 2.00 g/cc, or 2.05 g/cc, or falls within a range defined by any two of the above values.

In this embodiment, the powder compacted density ρ₁₋₁ of the micro-oxidized artificial graphite is controlled within an appropriate range, helping to increase the powder compacted density ρ₁ of the first carbon-based active material, thereby helping to increase the powder compacted density of the first portion 12a of the film layer 12, providing a high energy density for the battery, and reducing the possibility of damage to the negative electrode current collector.

Optionally, the micro-oxidized artificial graphite satisfies at least one of the following (4) to (6):
(4) a specific surface area SSA₁ of the micro-oxidized artificial graphite satisfies: 1.6 m²/g ≤ SSA₁ ≤ 3.5 m²/g, optionally, 1.8 m²/g ≤ SSA₁ ≤ 2.8 m²/g;
(5) a particle size by volume Dᵥ50₁ of the micro-oxidized artificial graphite satisfies: 10.0 µm ≤ Dᵥ50₁ ≤ 30.0 µm, optionally, 13.0 µm ≤ Dᵥ50₁ ≤ 25.0 µm; and
(6) a mass specific capacity Cₘ₁ of the micro-oxidized artificial graphite satisfies: 350 mAh/g ≤ Cₘ₁ ≤ 365 mAh/g, optionally, 355 mAh/g ≤ Cₘ₁ ≤ 362 mAh/g.

Specifically, SSA₁ may be 1.6 m²/g, 1.7 m²/g, 1.8 m²/g, 1.9 m²/g, 2.0 m²/g, 2.1 m²/g, 2.2 m²/g, 2.3 m²/g, 2.4 m²/g, 2.5 m²/g, 2.6 m²/g, 2.7 m²/g, 2.8 m²/g, 2.9 m²/g, 3.0 m²/g, 3.1 m²/g, 3.2 m²/g, 3.3 m²/g, 3.4 m²/g, or 3.5 m²/g, or falls within a range defined by any two of the above values.

Dᵥ50₁ may be 10 µm, 12 µm, 13 µm, 14 µm, 16 µm, 18 µm, 20 µm, 22 µm, 24 µm, 25 µm, 26 µm, 28 µm, or 30 µm, or falls within a range defined by any two of the above values.

Cₘ₁ may be 350 mAh/g, 352 mAh/g, 354 mAh/g, 355 mAh/g, 356 mAh/g, 358 mAh/g, 360 mAh/g, 362 mAh/g, 364 mAh/g, or 365 mAh/g, or falls within a range defined by any two of the above values.

Optionally, the micro-oxidized artificial graphite includes secondary particles.

Specifically, due to the formation and characteristics of secondary particles, the secondary particles can have more active sites exposed during electrochemical reactions, thereby helping to improve the ionic kinetic performance of the battery.

In this embodiment, the micro-oxidized artificial graphite at least partially includes the secondary particles, which can increase active sites of the micro-oxidized artificial graphite in electrochemical reactions, helping to increase active sites of the first carbon-based active material. Thus, the inner side film layer 12 of the negative electrode plate 1 away from the electrolyte also has good ionic kinetic performance, helping to further improve the charging and discharging performance and cycling performance of the battery.

It should be understood that secondary particles are morphological properties of a material. The micro-oxidized artificial graphite including secondary particles may refer to that all of the micro-oxidized artificial graphite has secondary particle morphology, or may refer to that part of the micro-oxidized artificial graphite has secondary particle morphology.

In an example, the first carbon-based active material including only micro-oxidized artificial graphite may refer to that all of the micro-oxidized artificial graphite is formed by secondary particles, or may refer to that only part of the micro-oxidized artificial graphite is formed by secondary particles, and the remaining micro-oxidized artificial graphite has no secondary particle morphology.

In another example, the first carbon-based active material including micro-oxidized artificial graphite and artificial graphite may refer to that the micro-oxidized artificial graphite is formed by secondary particles while the artificial graphite has no secondary particle morphology, may refer to that the artificial graphite is formed by secondary particles while the micro-oxidized artificial graphite has no secondary particle morphology, may refer to that both the micro-oxidized artificial graphite and the artificial graphite are formed by secondary particles, or may refer to that part of the micro-oxidized artificial graphite and part of the artificial graphite are formed by secondary particles, and the remaining micro-oxidized artificial graphite and the remaining artificial graphite have no secondary particle morphology.

Optionally, a quantity percentage n of the secondary particles in the micro-oxidized artificial graphite satisfies: 70% ≤ n ≤ 90%.

Specifically, n may be 70%, 75%, 80%, 85%, or 90%, or falls within a range defined by any two of the above values.

Optionally, the first carbon-based active material further includes natural graphite.

Natural graphite has a higher gram capacity than artificial graphite. In this embodiment, the natural graphite is introduced into the first carbon-based active material, helping to improve the gram capacity of the first carbon-based active material. Thus, the energy density of the inner film layer 12 of the negative electrode plate 1 is further increased, thereby helping to further increase the energy density of the battery.

Optionally, a ratio of a mass m₂ of the natural graphite to a mass m₁ of the first carbon-based active material satisfies: 0% < m₂/m₁ ≤ 50%.

Specifically, m₂/m₁ may be 1%, 5%, 10%, 15%, 20%, 25%, 30%, 35%, 40%, 45%, or 50%, or falls within a range defined by any two of the above values.

It should be understood that under a condition that the first carbon-based active material includes no natural graphite, m₂/m₁ may be 0.

Optionally, as shown in FIG. 1, a ratio of a thickness h₁ of the first portion 12a to a thickness h of the film layer 12 satisfies: 40% ≤ h₁/h ≤ 60%.

Specifically, h₁/h may be 40%, 42%, 44%, 46%, 48%, 50%, 52%, 54%, 56%, 58%, or 60%, or falls within a range defined by any two of the above values.

Optionally, as shown in FIG. 1, a ratio of a thickness h₂ of the second portion 12b to the thickness h of the film layer 12 satisfies: 40% ≤ h₂/h ≤ 60%.

Specifically, h₂/h may be 40%, 42%, 44%, 46%, 48%, 50%, 52%, 54%, 56%, 58%, or 60%, or falls within a range defined by any two of the above values.

In this embodiment, proportions of the thicknesses of the first portion 12a and second portion 12b of the film layer 12 are controlled, so that the energy density of the negative electrode plate 1 can be flexibly adjusted based on the needs of different batteries, to adapt to more different models of batteries.

In some embodiments, the negative electrode plate 1 may be prepared in the following manner: the above constituents used for preparing the negative electrode plate form negative electrode slurries respectively. For example, the first carbon-based active material, conductive agent, binder, and any other constituent are dispersed in a solvent (for example, N-methylpyrrolidone) to form a first slurry. The second carbon-based active material, conductive agent, binder, and any other constituent are dispersed in a solvent (for example, N-methylpyrrolidone) to form a second slurry. Then, the first slurry and the second slurry are applied onto the negative electrode current collector, followed by processes such as drying and cold pressing to obtain the negative electrode plate 1.

### [Positive electrode plate]

The positive electrode plate includes a positive electrode current collector and a positive electrode film layer disposed on at least one surface of the positive electrode current collector, where the positive electrode film layer includes a positive electrode active material according to a first aspect of this application.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well-known in the art. For example, the positive electrode active material may include at least one of the following materials: olivine-structured lithium-containing phosphate, lithium transition metal oxide, and respective modified compounds thereof. However, this application is not limited to these materials, and may alternatively use other conventional materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}CO_{0.2}Mn_{0.2}O₂ (NCM622 for short), and LiNi_{0.8}Co_{0.1}Mn_{0.1}O₂ (NCM811 for short)), and lithium nickel aluminum cobalt oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive, a positive electrode film-forming additive, and an additive capable of improving some performance of the battery, for example, an additive for improving overcharge performance of the battery, or an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

The following describes in detail a method for preparing a negative electrode plate according to an embodiment of this application.

FIG. 2 is a schematic flowchart of a method for preparing a negative electrode plate according to an embodiment of this application. As shown in FIG. 2, the method 200 includes the following steps.

S201: Provide a current collector 11.

S202: Prepare a first portion 12a of a film layer 12 on the current collector.

S203: Prepare a second portion 12b of the film layer 12 on the first portion 12a.

The first portion 12a includes a first carbon-based active material, the second portion 12b includes a second carbon-based active material, the second carbon-based active material includes secondary particles, and a powder compacted density of the first carbon-based active material is greater than a powder compacted density of the second carbon-based active material.

In this embodiment, the film layer 12 of a negative electrode plate 1 is prepared into a form with the first portion 12a and the second portion 12b. The first portion 12a includes the first carbon-based active material with a high powder compacted density, providing a high energy density for a battery. The second portion 12b includes secondary particles, providing good ionic kinetic performance for the negative electrode plate 1, thereby helping to improve the charging and discharging performance and cycling performance of the battery.

Optionally, the step S202 of preparing a first portion 12a of a film layer 12 on the current collector includes the following steps.

S2011: Prepare the first carbon-based active material.

S2012: Prepare the first carbon-based active material into a first slurry.

S2013: Apply the first slurry onto the current collector 11 to form the first portion 12a.

Optionally, the step S2011 of preparing the first carbon-based active material includes the following steps.

S2011-1: Prepare artificial graphite.

S2011-2: Put the artificial graphite into a furnace and conduct a micro-oxidization reaction at 600°C-900°C, with an air flow rate of 1 m³/h-9 m³/h and a furnace tube rotation speed of 2 r/min-6 r/min, to obtain micro-oxidized artificial graphite, where the micro-oxidized artificial graphite includes secondary particles.

In this embodiment, the micro-oxidized artificial graphite containing secondary particles can be prepared using the above method, which helps to increase the energy density of the battery and also helps to alleviate the swelling effect of the negative electrode plate during cycling of the battery, further helping to improve the cycling performance and service life of the battery.

Optionally, the step S2011-1 of preparing artificial graphite includes the following steps.

S2011-1a: Crush a raw material, where the raw material includes coke.

S2011-1b: Classify the crushed raw material to obtain a particle product with a particle size falling within a preset particle size distribution range.

S2011-1c: Perform shaping and fine powder removal treatment on the particle product to obtain a first intermediate product.

S2011-1d: Perform heat treatment on the first intermediate product to obtain a second intermediate product.

S2011-1e: Perform graphitization treatment on the second intermediate product at 2800°C-3200°C to obtain artificial graphite.

Optionally, the powder compacted density ρ₁ of the first carbon-based active material satisfies: 1.70 g/cc ≤ ρ₁ ≤ 2.05 g/cc, optionally, 1.80 g/cc ≤ ρ₁ ≤ 2.05 g/cc.

Optionally, the powder compacted density ρ₂ of the second carbon-based active material satisfies: 1.70 g/cc ≤ ρ₂ ≤ 1.90 g/cc, optionally, 1.80 g/cc ≤ ρ₂ ≤ 1.90 g/cc.

Optionally, a powder compacted density ρ₁ of the micro-oxidized artificial graphite under a pressure of 50000 N satisfies: 1.80 g/cc ≤ ρ₁₋₁ ≤ 2.05 g/cc, optionally, 1.90 g/cc ≤ ρ₁₋₁ ≤ 2.00 g/cc.

Optionally, the micro-oxidized artificial graphite satisfies at least one of the following (4) to (6):
(4) a specific surface area SSA₁ of the micro-oxidized artificial graphite satisfies: 1.6 m²/g ≤ SSA₁ ≤ 3.5 m²/g, optionally, 1.8 m²/g ≤ SSA₁ ≤ 2.8 m²/g;
(5) a particle size by volume Dᵥ50₁ of the micro-oxidized artificial graphite satisfies: 10.0 µm ≤ Dᵥ50₁ ≤ 30.0 µm, optionally, 13.0 µm ≤ Dᵥ50₁ ≤ 25.0 µm; and
(6) a mass specific capacity Cₘ₁ of the micro-oxidized artificial graphite satisfies: 350 mAh/g ≤ Cₘ₁ ≤ 365 mAh/g, optionally, 355 mAh/g ≤ Cₘ₁ ≤ 362 mAh/g.

Optionally, a quantity percentage n of the secondary particles in the micro-oxidized artificial graphite satisfies: 70% ≤ n ≤ 90%.

Optionally, the step S2011 of preparing the first carbon-based active material includes the following steps.

S2011-3: Add natural graphite to the micro-oxidized artificial graphite.

Optionally, a ratio of a mass m₂ of the natural graphite to a mass m₁ of the first carbon-based active material satisfies: 0% < m₂/m₁ ≤ 50%.

Optionally, the step S203 of preparing a second portion 12b of the film layer 12 on the first portion 12a includes the following steps.

S2031: Prepare the second carbon-based active material.

S2032: Prepare the second carbon-based active material into a second slurry.

S2033: Apply the second slurry onto the first portion 12a of the film layer 12 to form the second portion 12b.

Optionally, the step S2031 of preparing the second carbon-based active material includes the following steps.

S2031-1: Crush a raw material, where the raw material includes coke.

S2031-2: Perform shaping and fine powder removal treatment on the particle product to obtain a first intermediate product.

S2031-3: Mix the first intermediate product with pitch and perform pre-carbonization treatment on the resulting mixture at 300°C-600°C to obtain a third intermediate product.

S2031-4: Perform graphitization treatment on the third intermediate product at 3000°C to obtain secondary particles.

In this embodiment, the second carbon-based active material including secondary particles can be prepared using the above method, so that the outer film layer 12 of the negative electrode plate 1 in contact with an electrolyte has good ionic kinetic performance, helping to improve the charging and discharging performance and cycling performance of the battery.

Optionally, the second carbon-based active material satisfies at least one of the following (1) to (3):
(1) a specific surface area SSA₂ of the second carbon-based active material satisfies: 1.2 m²/g ≤ SSA₂ ≤ 3.0 m²/g, optionally, 1.5 m²/g ≤ SSA₂ ≤ 2.0 m²/g;
(2) a particle size by volume Dᵥ50₂ of the second carbon-based active material satisfies: 8.0 µm ≤ Dᵥ50₂ ≤ 20.0 µm, optionally, 10.0 µm ≤ Dᵥ50₂ ≤ 18.0 µm; and
(3) a mass specific capacity Cₘ₂ of the second carbon-based active material satisfies: 340 mAh/g ≤ Cₘ₂ ≤ 355 mAh/g, optionally, 343 mAh/g ≤ Cₘ₂ ≤ 350 mAh/g.

In some embodiments, the positive electrode plate, the negative electrode plate 1, and the separator may be made into an electrode assembly through winding or lamination.

In some embodiments, a battery cell may include an outer package. The outer package may be used for packaging the electrode assembly and an electrolyte.

In some embodiments, the outer package of the battery cell may be a hard shell, for example, a hard plastic shell, an aluminum shell, or a steel shell. The outer package of the battery cell may alternatively be a soft pack, for example, a soft pouch. A material of the soft pack may be plastic. As the plastic, polypropylene, polybutylene terephthalate, polybutylene succinate, and the like may be listed.

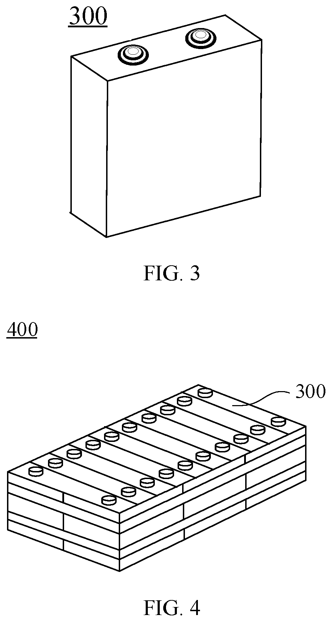

The battery cell is not limited to any particular shape in this application, and may be cylindrical, rectangular, or of any other shapes. For example, FIG. 3 shows a battery cell 300 of a rectangular structure as an example.

FIG. 4 shows a battery module 400 as an example. Referring to FIG. 4, in the battery module 400, a plurality of battery cells 300 may be sequentially arranged along a length direction of the battery module 400. Certainly, the battery cells may alternatively be arranged in any other manners. Further, the plurality of battery cells 300 may be fastened by fasteners.

Optionally, in an embodiment, the battery module 400 may further include an enclosure with an accommodating space, and the plurality of battery cells 300 are accommodated in the accommodating space.

Optionally, in an embodiment, the battery module 400 may be further assembled into a battery, and the battery may include one or more battery modules 400. The specific quantity may be chosen by persons skilled in the art based on use and capacity of the battery.

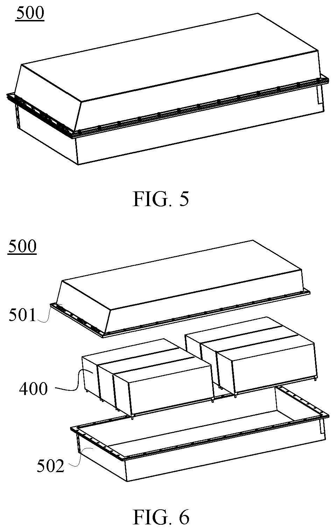

FIG. 5 and FIG. 6 show a battery 500 as an example. Referring to FIG. 5 and FIG. 6, the battery 500 may include a battery box and a plurality of battery modules 400 arranged in the battery box. The battery box includes an upper box body 501 and a lower box body 502. The upper box body 501 can cover the lower box body 502 to form an enclosed space for accommodating the battery modules 400. The plurality of battery modules 400 may be arranged in the battery box in any manner.

It should be understood that in other embodiments, the battery 500 is also referred to as a battery pack. The battery cells 300 may first be assembled into the battery modules 400, and then the battery modules 400 are assembled into the battery 500. Alternatively, the battery cells 300 may be directly assembled into the battery 500, so that an intermediate form of the battery module 400 is omitted.

In addition, this application further provides an electric apparatus. The electric apparatus includes at least one of the battery cell 300, the battery module 400, or the battery 500 provided in this application. The battery cell 300, the battery module 400, or the battery 500 may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The battery cell 300, the battery module 400, or the battery 500 may be selected for the electric apparatus based on requirements for using the electric apparatus.

An electric apparatus is described as an example. This electric apparatus is a battery electric vehicle, a hybrid electric vehicle, a plug-in hybrid electric vehicle, or the like. To satisfy requirements of the electric apparatus for high power and high energy density of a secondary battery, a battery pack or a battery module may be used.

In another example, the apparatus may be a mobile phone, a tablet computer, a notebook computer, or the like. Such apparatus is generally required to be light and thin and may use a secondary battery as its power source.

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### [Examples 1 to 26 and Comparative examples 1 to 3]

### Example 1

### (1) Preparation of positive electrode plate

A positive electrode active material lithium iron phosphate, a conductive agent acetylene black, and a binder polyvinylidene fluoride (PVDF) were dissolved in a solvent N-methylpyrrolidone (NMP) and fully stirred and mixed to uniformity to obtain a positive electrode slurry. Then, the positive electrode slurry was evenly applied onto a positive electrode current collector aluminum foil, followed by drying, cold pressing, and slitting, to obtain a positive electrode plate. A ratio of a mass of the positive electrode active material to a sum of masses of the positive electrode active material, the conductive agent, and the binder is 95%-98%; and optionally, the ratio is 96%-97%.

### (2) Preparation of negative electrode plate

A first carbon-based active material, a conductive agent acetylene black, a binder styrene-butadiene rubber (SBR), and a thickener sodium carboxymethyl cellulose (CMC) were dissolved in a solvent deionized water and mixed to uniformity to obtain a first slurry. A second carbon-based active material, a conductive agent acetylene black, a binder styrene-butadiene rubber (SBR), and a thickener sodium carboxymethyl cellulose (CMC) were dissolved in a solvent deionized water and mixed to uniformity to obtain a second slurry. Then, the first slurry was evenly applied onto a negative electrode current collector copper foil and then dried to form a first portion 12a of a film layer 12. Then, the second slurry was evenly applied onto the first portion 12a and then dried to form a second portion 12b of the film layer 12. Then, cold pressing and slitting were performed to obtain a negative electrode plate 1. The first carbon-based active material was micro-oxidized artificial graphite. The second carbon-based active material was carbon-based secondary particles.

In Example 1, the micro-oxidized artificial graphite was used as the first carbon-based active material. A powder compacted density ρ₁₋₁ of the micro-oxidized artificial graphite was 1.95 g/cc. A powder compacted density ρ₁ of the first carbon-based active material was equal to ρ₁₋₁, which was also 1.95 g/cc. A particle size by volume Dᵥ50₁ of the micro-oxidized artificial graphite was 18 µm. A mass specific capacity Cₘ₁ of the micro-oxidized artificial graphite was 360 mAh/g. A quantity percentage n of secondary particles in the micro-oxidized artificial graphite was 80%. The second carbon-based active material was formed by secondary particles. A powder compacted density ρ₂ of the second carbon-based active material was 1.82 g/cc. In this case, a powder compacted density ρ₂₋₁ of the secondary particles was equal to the powder compacted density ρ₂ of the second carbon-based active material, which was also 1.82 g/cc. The second carbon-based active material had a particle size by volume Dᵥ50₂ of 14 µm and a mass specific capacity Cₘ₂ of 348 mAh/g. An OI value of the negative electrode plate was 21.

It should be understood that all the above powder compacted densities were powder compacted densities under a pressure of 50000 N. The above secondary particles were secondary particles without coating layers. For the materials with the above particle sizes by volume, corresponding specific surface areas could be tested using a gas adsorption method. Details were not described herein.

### (3) Assembly of battery cell

The positive electrode plate, the separator, and the negative electrode plate 1 were sequentially stacked, so that the separator was located between the positive electrode plate and the negative electrode plate 1 and could separate the positive electrode plate from the negative electrode plate. Then, the above stacked components were wound to obtain an electrode assembly. The electrode assembly was placed into an enclosure. After drying was performed, an electrolyte in which a mass percentage of LiPF₆ was 11% was injected. Processes such as formation and standing were performed to obtain a battery cell 300.

### Example 2

As compared with Example 1, the first carbon-based active material of the negative electrode plate in Example 2 further included natural graphite, where a mass ratio m₂/m₁ of the natural graphite to the first carbon-based active material was 50%, the powder compacted density ρ₁ of the first carbon-based active material was 1.98 g/cc, and the powder compacted density ρ₁₋₁ of the micro-oxidized artificial graphite was 1.95 g/cc. The OI value of the negative electrode plate was 22.

### Example 3

As compared with Example 1, in Example 3, only the powder compacted density of the first carbon-based active material in the negative electrode plate was changed, that is, ρ₁ in Example 3 was 1.8 g/cc. The OI value of the negative electrode plate was 19.

### Example 4

As compared with Example 1, only the powder compacted density ρ₁ of the first carbon-based active material in the negative electrode plate was changed, that is, ρ₁ in Example 4 was 2.05 g/cc. The OI value of the negative electrode plate was 24.

### Example 5

As compared with Example 1, in Example 5, only the particle size by volume of the micro-oxidized artificial graphite in the negative electrode plate was changed, that is, Dᵥ50₁ in Example 5 was 13 µm. The OI value of the negative electrode plate was 19.

### Example 6

As compared with Example 1, in Example 6, only the particle size by volume of the micro-oxidized artificial graphite in the negative electrode plate was changed, that is, Dᵥ50₁ in Example 6 was 25 µm. The OI value of the negative electrode plate was 22.

### Example 7

As compared with Example 1, in Example 7, the particle size by volume Dᵥ50₁ of the micro-oxidized artificial graphite in the negative electrode plate was 8 µm.

### Example 8

As compared with Example 1, in Example 8, the particle size by volume Dᵥ50₁ of the micro-oxidized artificial graphite in the negative electrode plate was 27 µm.

### Example 9

As compared with Example 1, in Example 7, only the gram capacity of the micro-oxidized artificial graphite in the negative electrode plate was changed, that is, Cₘ₁ was 355 mAh/g. The OI value of the negative electrode plate was 23.

### Example 10

As compared with Example 1, in Example 8, only the gram capacity of the micro-oxidized artificial graphite in the negative electrode plate was changed, that is, Cₘ₁ was 362 mAh/g. The OI value of the negative electrode plate was 22.

### Example 11

As compared with Example 1, in Example 11, the gram capacity Cₘ₁ of the micro-oxidized artificial graphite in the negative electrode plate was 345 mAh/g.

### Example 12

As compared with Example 1, in Example 12, the gram capacity Cₘ₁ of the micro-oxidized artificial graphite in the negative electrode plate was 365 mAh/g.

### Example 13

As compared with Example 1, in Example 13, only the quantity percentage of the secondary particles in the micro-oxidized artificial graphite was changed, that is, n was 70%. The OI value of the negative electrode plate was 19.

### Example 14

As compared with Example 1, in Example 14, only the quantity percentage of the secondary particles in the micro-oxidized artificial graphite was changed, that is, n was 90%. The OI value of the negative electrode plate was 22.

### Example 15

As compared with Example 1, in the negative electrode plate of Example 15, the quantity percentage n of the secondary particles in the micro-oxidized artificial graphite was 96%.

### Example 16

As compared with Example 1, in Example 16, the second carbon-based active material further includes secondary particles with coating layers, where the powder compacted density ρ₂ of the second carbon-based active material was 1.80 g/cc, and a powder compacted density ρ₂₋₁ of secondary particles without coating layers was 1.82 g/cc. The OI value of the negative electrode plate was 15.

### Example 17

As compared with Example 1, in Example 17, only the powder compacted density of the second carbon-based active material in the negative electrode plate was changed, that is, ρ₂ was 1.70 g/cc. The OI value of the negative electrode plate was 20.

### Example 18

As compared with Example 1, in Example 18, only the powder compacted density of the second carbon-based active material in the negative electrode plate was changed, that is, ρ₂ was 1.90 g/cc. The OI value of the negative electrode plate was 23.

### Example 19

As compared with Example 1, in Example 19, the powder compacted density ρ₂ of the second carbon-based active material in the negative electrode plate was 1.65 g/cc.

### Example 20

As compared with Example 1, in Example 20, only the particle size by volume of the second carbon-based active material in the negative electrode plate was changed, that is, Dᵥ50₂ was 10 µm. The OI value of the negative electrode plate was 21.

### Example 21

As compared with Example 1, in Example 21, only the particle size by volume of the second carbon-based active material in the negative electrode plate was changed, that is, Dᵥ50₂ was 18 µm. The OI value of the negative electrode plate was 20.

### Example 22

As compared with Example 1, in Example 22, the particle size by volume Dᵥ50₂ of the second carbon-based active material in the negative electrode plate was 6 µm. The OI value of the negative electrode plate was 18.

### Example 23

As compared with Example 1, in Example 23, only the gram capacity of the second carbon-based active material in the negative electrode plate was changed, that is, Cₘ₁ was 343 mAh/g. The OI value of the negative electrode plate was 22.

### Example 24

As compared with Example 1, in Example 24, only the gram capacity of the second carbon-based active material in the negative electrode plate was changed, that is, Cₘ₁ was 350 mAh/g. The OI value of the negative electrode plate was 21.

### Example 25

As compared with Example 1, in Example 25, the gram capacity Cₘ₂ of the second carbon-based active material in the negative electrode plate was 335 mAh/g.

### Example 26

As compared with Example 1, in Example 26, the gram capacity Cₘ₂ of the second carbon-based active material in the negative electrode plate was 360 mAh/g.

### Comparative example 1

As compared with Example 1, the second carbon-based active material in Comparative example 1 was formed by primary particles without coating layers. The OI value of the negative electrode plate was 32.

### Comparative example 2

As compared with Example 1, in Comparative example 2, the powder compacted density ρ₁ of the first carbon-based active material in the negative electrode plate was 1.6 g/cc.

### Comparative example 3

As compared with Example 1, in Comparative example 3, the powder compacted density ρ₂ of the second carbon-based active material in the negative electrode plate was 2.00 g/cc.

For specific parameter settings in examples and comparative examples, refer to Table 1.

**Table 1 Product parameters in Examples 1 to 26 and Comparative examples 1 to 3**

| | First carbon-based active material | ρ₁ (g/cc) | ρ₁₋₁ (g/cc) | Dᵥ50₁ (µm) | Cₘ₁ (mAh/g) | n (%) | m₂/m₁ (%) | Second carbon-based active material | ρ₂ (g/cc) | ρ₂₋₁ (g/cc) | Dᵥ50₂ (µm) | Cₘ₂ (mAh/g) | OI |
|---|---|---|---|---|---|---|---|---|---|---|---|---|---|
| Example 1 | Micro-oxidized AG | 1.95 | 1.95 | 18 | 360 | 80 | 0 | Secondary particle | 1.82 | 1.82 | 14 | 348 | 21 |
| Example 2 | Micro-oxidized AG+NG | 1.98 | 1.95 | 18 | 360 | 80 | 50 | Secondary particle | 1.82 | 1.82 | 14 | 348 | 22 |
| Example 3 | Micro-oxidized AG | 1.8 | 1.8 | 18 | 360 | 80 | 0 | Secondary particle | 1.82 | 1.82 | 14 | 348 | 19 |
| Example 4 | Micro-oxidized AG | 2.05 | 2.05 | 18 | 360 | 80 | 0 | Secondary particle | 1.82 | 1.82 | 14 | 348 | 24 |
| Example 5 | Micro-oxidized AG | 1.95 | 1.95 | 13 | 360 | 80 | 0 | Secondary particle | 1.82 | 1.82 | 14 | 348 | 19 |
| Example 6 | Micro-oxidized AG | 1.95 | 1.95 | 25 | 360 | 80 | 0 | Secondary particle | 1.82 | 1.82 | 14 | 348 | 22 |
| Example 7 | Micro-oxidized AG | 1.95 | 1.95 | 8 | 360 | 80 | 0 | Secondary particle | 1.82 | 1.82 | 14 | 348 | 20 |
| Example 8 | Micro-oxidized AG | 1.95 | 1.95 | 27 | 360 | 80 | 0 | Secondary particle | 1.82 | 1.82 | 14 | 348 | 24 |
| Example 9 | Micro-oxidized AG | 1.95 | 1.95 | 18 | 355 | 80 | 0 | Secondary particle | 1.82 | 1.82 | 14 | 348 | 23 |
| Example 10 | Micro-oxidized AG | 1.95 | 1.95 | 18 | 362 | 80 | 0 | Secondary particle | 1.82 | 1.82 | 14 | 348 | 22 |
| Example 11 | Micro-oxidized AG | 1.95 | 1.95 | 18 | 345 | 80 | 0 | Secondary particle | 1.82 | 1.82 | 14 | 348 | 23 |
| Example 12 | Micro-oxidized AG | 1.95 | 1.95 | 18 | 365 | 80 | 0 | Secondary particle | 1.82 | 1.82 | 14 | 348 | 18 |
| Example 13 | Micro-oxidized AG | 1.95 | 1.95 | 18 | 360 | 70 | 0 | Secondary particle | 1.82 | 1.82 | 14 | 348 | 19 |
| Example 14 | Micro-oxidized AG | 1.95 | 1.95 | 18 | 360 | 90 | 0 | Secondary particle | 1.82 | 1.82 | 14 | 348 | 22 |
| Example 15 | Micro-oxidized AG | 1.95 | 1.95 | 18 | 360 | 96 | 0 | Secondary particle | 1.82 | 1.82 | 14 | 348 | 20 |
| Example 16 | Micro-oxidized AG | 1.95 | 1.95 | 18 | 360 | 80 | 0 | Secondary particle+secondary particle (with coating) | 1.80 | 1.82 | 14 | 348 | 15 |
| Example 17 | Micro-oxidized AG | 1.95 | 1.95 | 18 | 360 | 80 | 0 | Secondary particle | 1.7 | 1.7 | 14 | 348 | 20 |
| Example 18 | Micro-oxidized AG | 1.95 | 1.95 | 18 | 360 | 80 | 0 | Secondary particle | 1.9 | 1.9 | 14 | 348 | 23 |
| Example 19 | Micro-oxidized AG | 1.95 | 1.95 | 18 | 360 | 80 | 0 | Secondary particle | 1.65 | 1.65 | 14 | 348 | 26 |
| Example 20 | Micro-oxidized AG | 1.95 | 1.95 | 18 | 360 | 80 | 0 | Secondary particle | 1.82 | 1.82 | 10 | 348 | 21 |
| Example 21 | Micro-oxidized AG | 1.95 | 1.95 | 18 | 360 | 80 | 0 | Secondary particle | 1.82 | 1.82 | 18 | 348 | 20 |
| Example 22 | Micro-oxidized AG | 1.95 | 1.95 | 18 | 360 | 80 | 0 | Secondary particle | 1.82 | 1.82 | 6 | 348 | 18 |
| Example 23 | Micro-oxidized AG | 1.95 | 1.95 | 18 | 360 | 80 | 0 | Secondary particle | 1.82 | 1.82 | 14 | 343 | 22 |
| Example 24 | Micro-oxidized AG | 1.95 | 1.95 | 18 | 360 | 80 | 0 | Secondary particle | 1.82 | 1.82 | 14 | 350 | 21 |
| Example 25 | Micro-oxidized AG | 1.95 | 1.95 | 18 | 360 | 80 | 0 | Secondary particle | 1.82 | 1.82 | 14 | 335 | 22 |
| Example 26 | Micro-oxidized AG | 1.95 | 1.95 | 18 | 360 | 80 | 0 | Secondary particle | 1.82 | 1.82 | 14 | 360 | 20 |
| Comparative example 1 | Micro-oxidized AG | 1.95 | 1.95 | 18 | 360 | 80 | 0 | Primary particle | 1.82 | 1.82 | 14 | 348 | 32 |
| Comparative example 2 | Micro-oxidized AG | 1.6 | 1.6 | 18 | 360 | 80 | 0 | Secondary particle | 1.82 | 1.82 | 14 | 348 | 16 |
| Comparative example 3 | Micro-oxidized AG | 1.95 | 1.95 | 18 | 360 | 80 | 0 | Secondary particle | 2 | 2 | 14 | 348 | 19 |

In Table 1, ρ₁ represents the powder compacted density of the first carbon-based active material under the pressure of 50000 N, ρ₁₋₁ represents the powder compacted density of the micro-oxidized artificial graphite under the pressure of 50000 N, Dᵥ50₁ represents the particle size by volume of the micro-oxidized artificial graphite, Cₘ₁ represents the gram capacity of the micro-oxidized artificial graphite, n represents the quantity percentage of the secondary particles in the micro-oxidized artificial graphite, m₂/m₁ represents the ratio of the mass of the natural graphite in the first carbon-based active material to the mass of the first carbon-based active material, ρ₂ represents the powder compacted density of the second carbon-based active material under the pressure of 50000 N, ρ₂₋₁ represents the powder compacted density of the secondary particles without coating layers under the pressure of 50000 N, Dᵥ50₂ represents the particle size by volume of the second carbon-based active material, Cₘ₁ represents the gram capacity of the second carbon-based active material, OI represents the OI value of the negative electrode plate 1, that is, the orientation index, "micro-oxidized AG" represents the micro-oxidized artificial graphite, "NG" represents the natural graphite, "secondary particle" represents carbon-based secondary particles without coating layers, "primary particle" represents carbon-based primary particles without coating layers, and "secondary particle (with coating)" represents carbon-based secondary particles with coating layers.

Battery performance test results of Examples 1 to 26 and Comparative examples 1 to 3 are given in Tables 2 and 3.

**Table 2 Battery charging time test results of different examples and comparative examples**

| | Room-temperature charging time at 0%-80% SOC |
|---|---|
| Example 1 | 25.1 |
| Example 2 | 27.2 |
| Example 3 | 33.1 |
| Example 4 | 31.7 |
| Example 5 | 25.1 |
| Example 6 | 25.6 |
| Example 7 | 23.3 |
| Example 8 | 35.2 |
| Example 9 | 25.2 |
| Example 10 | 25.9 |
| Example 11 | 24.3 |
| Example 12 | 34.8 |
| Example 13 | 26.1 |
| Example 14 | 24.5 |
| Example 15 | 25.5 |
| Example 16 | 23.1 |
| Example 17 | 24.2 |
| Example 18 | 30 |
| Example 19 | 30.7 |
| Example 20 | 22.3 |
| Example 21 | 34.8 |
| Example 22 | 18.6 |
| Example 23 | 24.9 |
| Example 24 | 25.8 |
| Example 25 | 24.1 |
| Example 26 | 34.5 |
| Comparative example 1 | 39 |
| Comparative example 2 | 41.9 |
| Comparative example 3 | 46.5 |

**Table 3 Cycles and full-charge swelling rate test results of different examples**

| | Cycles to 80% SOH at room temperature | Full-charge swelling rate |
|---|---|---|
| Example 1 | 4513 | 18.5% |
| Example 2 | 4151 | 20.0% |
| Example 3 | 4440 | 20.9% |
| Example 4 | 4437 | 18.3% |
| Example 5 | 4520 | 20.9% |
| Example 6 | 4321 | 17.7% |
| Example 7 | 4510 | 23.5% |
| Example 8 | 4571 | 17.5% |
| Example 9 | 4498 | 17.8% |
| Example 10 | 4299 | 18.3% |
| Example 11 | 4543 | 16.4% |
| Example 12 | 4254 | 18.4% |
| Example 13 | 4415 | 20.1% |
| Example 14 | 4540 | 17.8% |
| Example 15 | 4519 | 18.2% |
| Example 16 | 4418 | 19.3% |
| Example 17 | 4442 | 18.7% |
| Example 18 | 4465 | 18.8% |
| Example 19 | 3869 | 22.9% |
| Example 20 | 4530 | 18.8% |
| Example 21 | 4345 | 17.5% |
| Example 22 | 4006 | 17.2% |
| Example 23 | 4477 | 18.9% |
| Example 24 | 4470 | 18.3% |
| Example 25 | 4561 | 19.2% |
| Example 26 | 4289 | 19.7% |

It can be seen from performance comparison between Example 1 and Comparative examples 2 and 3 that the charging time of the lithium-ion battery in Example 1 is much shorter than that of the lithium-ion batteries in Comparative examples 2 and 3. In Example 1, the powder compacted density of the first carbon-based active material is greater than the powder compacted density of the second carbon-based active material, while in Comparative examples 2 and 3, the powder compacted density of the first carbon-based active material is less than the powder compacted density of the second carbon-based active material. This indicates that controlling the powder compacted density of the first carbon-based active material to be greater than the powder compacted density of the second carbon-based active material can effectively improve the kinetic performance of lithium ions in the negative electrode plate, thereby improving the charging and discharging performance of the lithium-ion battery.

It can be seen from performance comparison between various examples and Comparative example 1 that the charging time of the lithium-ion batteries in Examples 1 to 26 are all shorter than that of the lithium-ion batteries in Comparative example 1. In Examples 1 to 26, the OI value of the negative electrode plate 1 falls within a value range of 10-30, while the OI value of Comparative example 1 is 32 and exceeds the above value range. Thus, this indicates that controlling the OI value of the negative electrode plate 1 within the above value range helps to improve the charging and discharging performance of the lithium-ion battery.

As compared with Example 1, the first carbon-based active material in Example 2 includes natural graphite. It can be seen from various performance of the lithium-ion batteries in Examples 1 and 2 that the natural graphite added does not significantly affect the charging and discharging performance, cycling performance, and swelling of the lithium-ion battery, while the natural graphite generally has a higher gram capacity than the artificial graphite. Thus, part of natural graphite is introduced into the first carbon-based active material, helping to increase the energy density of the lithium-ion battery without affecting the various performance of the lithium-ion battery.

It can be seen from performance comparison between Examples 3 and 4 and Comparative example 2 that the charging time of the lithium-ion batteries in Examples 3 and 4 is also shorter than that of the lithium-ion battery in Comparative example 2. The powder compacted densities of the first carbon-based active materials in Examples 3 and 4 are 1.80 g/cc and 2.05 g/cc respectively and fall within a value range of 1.70 g/cc-2.05 g/cc, while the powder compacted density of the first carbon-based active material in Comparative example 2 is 1.6 g/cc and exceeds the above value range. Thus, this indicates that controlling the powder compacted density of the first carbon-based active material within the above value range helps to improve the kinetic performance of the lithium-ion battery, reducing the charging time.

It can be seen from performance comparison between Examples 5, 6, and 8 and Example 7 that under a condition that the charging time in these examples is shorter than that in the comparative examples, in Examples 5, 6, and 8, the cycles are all more than that in Example 7, and the full-charge swelling rates are all less than that in Example 7. The median particle sizes by volume (Dᵥ50₁) of the micro-oxidized artificial graphite in Examples 5, 6, and 8 are 13 µm, 25 µm, and 27 µm respectively and fall within a value range of 10 µm-30 µm, while the median particle size by volume in Example 7 is 8 µm and exceeds the above value range. Thus, this indicates that controlling the median particle size by volume of the micro-oxidized artificial graphite within the above value range helps to improve the cycling performance of the lithium-ion battery and alleviate the swelling of battery expansion, thereby helping to improve the safety performance of the battery.

As compared with Examples 9 and 10, in Examples 11 and 12, the gram capacities (Cₘ₁) of the micro-oxidized artificial graphite are 345 mAh/g and 365 mAh/g respectively and exceed the value range of 350 mAh/g-365 mAh/g in spite of little difference in charging and discharging performance, cycling performance, and swelling in the four examples. However, in practical application, the gram capacity of the material in Example 11 is excessively low, so that the energy density of the battery is excessively low and cannot better meet the practical application requirements. On the contrary, the gram capacity in Example 12 is excessively high, so that the preparation of raw materials is extremely difficult. This is not conducive to large-scale production and application. Thus, controlling the gram capacity of the micro-oxidized artificial graphite within the above range can improve the charging and discharging performance and cycling performance of the lithium-ion battery and alleviate the swelling of the lithium-ion battery, and also facilitates the practical mass production and application of the lithium-ion battery.

In Examples 13 to 15, the percentage (n) of the secondary particles in the micro-oxidized artificial graphite is regulated. In Example 13, the percentage of the secondary particles is 70%, and in Example 14, the percentage of the secondary particles is 90%, while in Example 15, the percentage (n) of the secondary particles in the micro-oxidized artificial graphite is reaches up to 96% and exceeds the value range of 70%-90%. Under a condition that the charging time in the three examples is similar, it can be seen from performance data comparison between the Examples 13 and 14 that higher percentage of the secondary particles leads to more cycles and smaller swelling rate of the battery. Thus, this indicates that the secondary particles help to improve the ionic kinetic performance of the electrode material, thereby helping to improve the cycling performance of the lithium-ion battery; and the strong adhesion between the secondary particles also helps to improve the cohesion inside the negative electrode plate, thereby helping to alleviate the swelling of the battery. It can be seen from comparison between Example 15 and Examples 13 and 14 that the cycles and swelling in Example 15 are better than those in Example 13, but as compared with Example 14, in Example 15, the cycles are reduced and the full-charge swelling rate is increased. This indicates that the performance of the lithium-ion battery is not infinitely improved with the increase in the percentage of the secondary particles in the micro-oxidized artificial graphite. In addition, an excessively high percentage of the secondary particles increases the processing difficulty of the material. In other words, micro-oxidized artificial graphite in which a percentage of secondary particle exceeds 90% is difficulty prepared. Thus, controlling the percentage of the secondary particles in the micro-oxidized artificial graphite within the above value range allows the lithium-ion battery to have good charging and discharging performance and cycling performance, and helps to alleviate the swelling of the lithium-ion battery.

In Example 16, the second carbon-based active material includes the secondary particles with coating layers. It can be seen that similar to Example 1, controlling the powder compacted density of the first carbon-based active material to be greater than the powder compacted density of the second carbon-based active material can obtain the lithium-ion battery with improved charging and discharging performance, improved cycling performance, and alleviated swelling.

The powder compacted densities of the second carbon-based active material in Examples 17 to 19 are regulated. The powder compacted densities of the second carbon-based active material in Examples 17 and 19 are 1.70 g/cc and 1.90 g/cc respectively and fall within the value range of 1.70 g/cc to 1.90 g/cc. However, the powder compacted density of the second carbon-based active material in Example 19 is 1.65 g/cc and exceeds the above value range. It can be seen from performance comparison between Example 19 and Examples 17 and 18 that as compared with the comparative examples, the lithium-ion battery in Example 19 has improved charging and discharging performance, improved cycling performance, and alleviated swelling, but as compared with Examples 17 and 18, the above performance of the lithium-ion battery in Example 19 is inferior to that in Examples 17 and 18. Thus, this indicates that controlling the powder compacted density of the second carbon-based active material within the above value range allows the lithium-ion battery to have good charging and discharging performance and cycling performance, and helps to alleviate the swelling of the lithium-ion battery.

In Examples 20 to 22, the median particle sizes by volume (Dᵥ50₂) of the second carbon-based active materials are regulated. The median particle sizes by volume of the second carbon-based active materials in Examples 20 and 21 are 10 µm and 18 µm respectively and fall within the value range of 8 µm-20 µm. The median particle size by volume of the second carbon-based active material in Example 22 is 6 µm and exceeds the above value range. As compared with the comparative examples, the lithium-ion batteries in Examples 20 to 22 have improved charging and discharging performance, improved cycling performance, and alleviated swelling. Although the full charge time in Example 22 is the shortest among the above three examples, the median particle size by volume of the second carbon-based active material in Example 22 is excessively small, so that the material is difficultly prepared; and the cycles of the battery in Example 22 are reduced. Thus, controlling the median particle size by volume of the second carbon-based active material within the above value range improves the charging and discharging performance of the lithium-ion battery, and also helps to improve the cycling performance of the lithium-ion battery.

In Examples 23 to 26, the gram capacities (Cₘ₂) of the second carbon-based active materials are regulated. The gram capacities in Examples 23 and 24 are 343 mAh/g and 350 mAh/g respectively and fall within the value range of 340 mAh/g to 355 mAh/g, while the gram capacities in Examples 25 and 26 are 335 mAh/g and 360 mAh/g respectively and exceed the above value range. In spite of little difference in charging and discharging performance, cycling performance, and swelling in the four examples, in practical application, the gram capacity of the material in Example 25 is excessively low, so that the energy density of the battery is excessively low and cannot better meet the practical application requirements. On the contrary, the gram capacity in Example 26 is excessively high, so that the raw material is expensive and difficult to obtain. This is not conducive to large-scale production and application. Thus, controlling the gram capacity of the second carbon-based active material within the above range can improve the charging and discharging performance and cycling performance of the lithium-ion battery and alleviate the swelling of the lithium-ion battery, and also facilitates the practical mass production and application of the lithium-ion battery.

The following briefly describes test methods of physical and performance parameters mentioned in the embodiments of this application.

### 1. Test method of powder compacted density

A powder compacted density of a material could be tested using a method known in the art. For example, in accordance with GB/T 24533-2009, an electronic pressure testing machine (such as UTM7305) was used for the test: a specified amount of powder was put on a special compaction mold, different pressures were set, and the thickness of the powder under different pressures could be read on a device, and compacted densities under different pressures could be obtained through calculation.

### 2. Test method of median particle size by volume

A particle size by volume of a material could be tested using a method known in the art. For example, in accordance with GB/T 19077-2016/ISO 13320:2009, a laser diffractometer was used for the test: after instrument calibration and background measurement were completed and a sample was prepared, optical signals were collected using the instrument. An appropriate optical model was used to calculate a scattering matrix, and a scattering light distribution was ultimately converted into a particle size distribution.

### 3. Test method of gram capacity

PVDF, conductive carbon black (SP), and an active material were mixed at a specified ratio to obtain a negative electrode slurry. The negative electrode slurry was applied onto a copper foil and scraped to uniformity with a scraper, followed by drying, cold pressing, and punching. The resulting product was assembled into a button battery with a lithium plate, a separator, and the like. A LAND testing machine was used to perform charge and discharge cycles at 0.005 V to 2 V, and testing was performed to obtain a corresponding gram capacity of the active material.

### 4. Test method of orientation index (OI value)

An OI value of a material on a negative electrode plate could be tested using a method known in the art. For example, an XRD pattern of a sample was tested, and the OI value was obtained through calculation of C004/C110.

### 5. Test method of charging time

At 25°C, a battery was charged at 0.33C for t minutes to 80% SOC. Then, the battery was left standing for 30 minutes and then discharged at 1C. Then the battery was left standing for 30 minutes. After 20 cycles were performed, the fully charged battery was disassembled to observe whether lithium precipitation occurred on a negative electrode. If no lithium precipitation occurred, this case indicated that the room-temperature charging time of the battery at 0%-80% SOC was t minutes.

### 6. Test method of cycling performance

A full battery was assembled, and a LAND testing machine was used to perform cycle testing. The battery was repeatedly charged and discharged at a charge rate of 0.5C and a discharge rate of 1C. Cycles to 80% SOH of the battery were calculated, which were cycles to 80% SOH of the battery at room temperature.

### 7. Test method of volume swelling rate

At room temperature, a thickness d₁ of an electrode plate was measured. After the electrode plate was assembled into a battery, the battery was charged to 4.2 V at 0.5C, left standing for 3 minutes, and then disassembled. A thickness d₂ of the electrode plate at that time point was measured. A full-charge swelling rate could be calculated using the following formula: (d₂-d₁)/d₁ × 100%.

### 8. Test method of quantity percentage of secondary particles

A quantity percentage (n) of secondary particles in micro-oxidized artificial graphite could be obtained by detecting a scanning electron microscope of the material. Specifically, a quantity n₂ of particles with secondary particle morphology and a quantity n₁ of all particles in the scanning electron microscope were counted separately, and then a ratio of the two quantities was calculated, in other words, n = n₂/n₁. To improve the accuracy of the ratio, multiple scanning electron microscopes of the material could be used to separately count the quantities of particles, and then the quantity percentage of the secondary particles was calculated based on an average value of multiple statistical results.

In an example, a scanning electron microscope image could be obtained using the following method.

A specified mass (≤ 2 g) of material under test was weighed and adhered to a conductive adhesive, then the conductive adhesive was put on a sample table for drying. The treated sample table was put into a field emission scanning electron microscope (for example, a Zeiss Sigma300 scanning electron microscope could be used), and the morphology of the material was captured by the field emission scanning electron microscope.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A negative electrode plate, **characterized in that** the negative electrode plate comprises:
a negative electrode current collector and a film layer disposed on the negative electrode current collector, wherein
the film layer comprises a first portion and a second portion disposed along a thickness direction of the film layer, the first portion is disposed on the current collector, and the second portion is disposed on the first portion; and
the first portion comprises a first carbon-based active material, the second portion comprises a second carbon-based active material, the second carbon-based active material comprises secondary particles, and a powder compacted density of the first carbon-based active material is greater than a powder compacted density of the second carbon-based active material.

2. The negative electrode plate according to claim 1, **characterized in that** the powder compacted density ρ₂ of the second carbon-based active material under a pressure of 50000 N satisfies: 1.70 g/cc ≤ ρ₂ ≤ 1.90 g/cc, optionally, 1.80 g/cc ≤ ρ₂ ≤ 1.90 g/cc.

3. The negative electrode plate according to claim 1 or 2, **characterized in that** the second carbon-based active material satisfies at least one of the following (1) to (3):
(1) a specific surface area SSA₂ of the second carbon-based active material satisfies: 1.2 m²/g ≤ SSA₂ ≤ 3.0 m²/g, optionally, 1.5 m²/g ≤ SSA₂ ≤ 2.0 m²/g;
(2) a particle size by volume Dᵥ50₂ of the second carbon-based active material satisfies: 8.0 µm ≤ Dᵥ50₂ ≤ 20.0 µm, optionally, 10.0 µm ≤ Dᵥ50₂ ≤ 18.0 µm; and
(3) a mass specific capacity Cₘ₂ of the second carbon-based active material satisfies: 340 mAh/g ≤ Cₘ₂ ≤ 355 mAh/g, optionally, 343 mAh/g ≤ Cₘ₂ ≤ 350 mAh/g.

4. The negative electrode plate according to any one of claims 1 to 3, **characterized in that** an OI value of the negative electrode plate satisfies: 10 ≤ OI ≤ 30.

5. The negative electrode plate according to any one of claims 1 to 4, **characterized in that** the powder compacted density ρ₁ of the first carbon-based active material under a pressure of 50000 N satisfies: 1.70 g/cc ≤ ρ₁ ≤ 2.05 g/cc, optionally, 1.80 g/cc ≤ ρ₁ ≤ 2.05 g/cc.

6. The negative electrode plate according to any one of claims 1 to 5, **characterized in that** the first carbon-based active material comprises micro-oxidized artificial graphite.

7. The negative electrode plate according to claim 6, **characterized in that** a powder compacted density ρ₁₋₁ of the micro-oxidized artificial graphite under a pressure of 50000 N satisfies: 1.80 g/cc ≤ ρ₁₋₁ ≤ 2.05 g/cc, optionally, 1.90 g/cc ≤ ρ₁₋₁ ≤ 2.00 g/cc.

8. The negative electrode plate according to claim 6 or 7, **characterized in that** the micro-oxidized artificial graphite satisfies at least one of the following (4) to (6):
(4) a specific surface area SSA₁ of the micro-oxidized artificial graphite satisfies: 1.6 m²/g ≤ SSA₁ ≤ 3.5 m²/g, optionally, 1.8 m²/g ≤ SSA₁ ≤ 2.8 m²/g;
(5) a particle size by volume Dᵥ50₁ of the micro-oxidized artificial graphite satisfies: 10.0 µm ≤ Dᵥ50₁ ≤ 30.0 µm, optionally, 13.0 µm ≤ Dᵥ50₁ ≤ 25.0 µm; and
(6) a mass specific capacity Cₘ₁ of the micro-oxidized artificial graphite satisfies: 350 mAh/g ≤ Cₘ₁ ≤ 365 mAh/g, optionally, 355 mAh/g ≤ Cₘ₁ ≤ 362 mAh/g.

9. The negative electrode plate according to any one of claims 6 to 8, **characterized in that** the micro-oxidized artificial graphite comprises secondary particles.

10. The negative electrode plate according to claim 9, **characterized in that** a quantity percentage n of the secondary particles in the micro-oxidized artificial graphite satisfies: 70% ≤ n ≤ 90%.

11. The negative electrode plate according to any one of claims 1 to 10, **characterized in that** the first carbon-based active material further comprises natural graphite.

12. The negative electrode plate according to claim 11, **characterized in that** a ratio of a mass m₂ of the natural graphite to a mass m₁ of the first carbon-based active material satisfies: 0% < m₂/m₁ ≤ 50%.

13. The negative electrode plate according to any one of claims 1 to 12, **characterized in that** a ratio of a thickness h₁ of the first portion to a thickness h of the film layer satisfies: 40% ≤ h₁/h ≤ 60%.

14. The negative electrode plate according to any one of claims 1 to 13, **characterized in that** a ratio of a thickness h₂ of the second portion to the thickness h of the film layer satisfies: 40% ≤ h₂/h ≤ 60%.

15. A method for preparing a negative electrode plate, **characterized in that** the method comprises:
providing a current collector;
preparing a first portion of a film layer on the current collector, wherein the first portion comprises a first carbon-based active material; and
preparing a second portion of the film layer on the first portion of the film layer, wherein the second portion comprises a second carbon-based active material, the second carbon-based active material comprises secondary particles, and a powder compacted density of the first carbon-based active material is greater than a powder compacted density of the second carbon-based active material.

16. A battery cell, **characterized in that** the battery cell comprises the negative electrode plate according to any one of claims 1 to 14; or
a negative electrode plate prepared using the method according to claim 15.

17. A battery, **characterized in that** the battery comprises the battery cell according to claim 16.

18. An electric apparatus, **characterized in that** the electric apparatus comprises the battery cell according to claim 16 and/or the battery according to claim 17.
